# EUROPÄISCHE PATENTSCHRIFT

(11) **EP 0 941 905 B1**
(45) Veröffentlichungstag und Bekanntmachung des Hinweises auf die Patenterteilung: **31.03.2004**
(21) Anmeldenummer: 99102260.9
(22) Anmeldetag: 05.02.1999
(51) Int. Cl.: B60T 13/66, B60T 8/00, B60T 7/20

(54) **Verfahren zur Stabilisierung von Gespannen und Bremsvorrichtung für Gespanne**
Process for stabilising hitches and brake system for hitches
Procédé pour la stabilisation des attelages et système de freinage pour attelages

(30) Priorität: 12.03.1998 DE 19810642
(43) Veröffentlichungstag der Anmeldung: 15.09.1999
(73) Patentinhaber: DaimlerChrysler AG, 70567 Stuttgart (DE)
(72) Erfinder: Fischer, Jörg, 73733 Esslingen (DE); Junghans, Horst, 71384 Weinstadt (DE)

(56) Entgegenhaltungen:
- DE-C- 3 831 492
- US-A- 3 895 683
- US-A- 5 496 098
- Society of Automotive Engineers Inc, "Vehicle Dynamics Control for Commercial Vehicles", SAE973284, 1997

## Beschreibung

Die Erfindung betrifft eine Bremsvorrichtung für Gespanne nach dem Oberbegriff der Ansprüche 1 oder 2.

Ein Verfahren zur Stabilitätskontrolle von Gespannen geht beispielsweise aus der DE 38 31 492 C1 hervor. Bei diesem Verfahren wird die Fahrzeuggeschwindigkeit, der Lenkradwinkel und der Knickwinkel zwischen der Längsachse des Zugfahrzeugs und der Längsachse des Anhängers gemessen. Aus den gemessenen Werten wird die Knickwinkelschwingung für eine bestimmte Fahrzeuggeschwindigkeit ermittelt und zusammen mit der dazugehörigen Fahrzeuggeschwindigkeit gespeichert. Aus den gespeicherten Wertepaaren Dämpfung-Fahrzeuggeschwindigkeit wird die kritische Fahrzeuggeschwindigkeit ermittelt, bei der die Dämpfung der Knickwinkelschwingung Null ist. Es wird der Quotient von Effektivwert des Knickwinkels zu Effektivwert des Lenkradwinkels gebildet und mit einem vorbestimmten Grenzwert verglichen. Die von der Fahrzeuggeschwindigkeit abhängige Dämpfung der Knickwinkelschwingung wird nur dann bestimmt und zusammen mit der dazugehörigen Fahrzeuggeschwindigkeit gespeichert, wenn der Quotient am Effektivwert des Knickwinkels und Effektivwert des Lenkradwinkels größer oder gleich dem vorbestimmten Grenzwert ist. Es wird ein Warnsignal erzeugt, wenn die aktuelle Fahrzeuggeschwindigkeit größer als eine Grenzgeschwindigkeit ist.

Durch die Ausgabe des Warnsignals wird der Führer des Zugfahrzeugs zwar auf stabilitätskritische Fahrzustände hingewiesen. Die Reaktion auf derartige stabilitätskritische Fahrzustände liegt bei diesem Verfahren jedoch im Ermessen des Fahrzeugführers.

Aus der DE 36 00 708 A1 geht eine Schlingerstopp-Vorrichtung für ein Kraftfahrzeug hervor, welches zur Vermeigung einer gefährlichen Situation durch Aufschaukeln (schlingern) in einem Anhänger eines Fahrzeugs angeordnet ist. Bei dieser Vorrichtung mißt ein Sensor die Bewegung des Anhängers und stellt fest, daß gewisse Grenzwerte überschritten sind und die Gefahr des Schleuderns und eventuellen Umschlagen des Anhängers besteht. Diese Feststellung wird an eine Bremsvorrichtung weitergegeben, die dann eine oder mehrere Anhängerachsen kontinuierlich kurzzeitig oder in Intervallen abbremst.

Aus der DE 33 44 301 A1 geht eine Bremsanlage für ein Anhängerfahrzeug hervor, welche Bauteile zum elektrischen Steuern wenigstens eines Druckluft-Versorgungskreises, der Bremszylindern des Anhängers geregelten Druck zuführt, umfaßt. Die Bremsanlage des Anhängers ist mit einer Bremsanlage eines Zugfahrzeugs über lösbare Kupplungsteile für die Druckluftweiterleitung verbindbar. In einer Versorgungsleitung von einem mit der Bremsanlage des Zugfahrzeugs verbindbaren Kupplungsteil ist ein Druck-Meßgrößenumformer angeordnet, der den Versorgungsdruck erfaßt und ein ihm entsprechendes elektrisches Signal an einen elektrischen, in dem Anhänger angeordneten Betätigungskreis abgibt, der den Druckluft-Versorgungskreis in der Bremsanlage des Anhängers steuert.

Durch eine derartige im Anhängerfahrzeug angeordnete Vorrichtung soll eine im Anhänger angeordnete elektropneumatische Bremsanlage auch für den Betrieb mit konventionellen Zugfahrzeugen durch einen Druckwandler zur Aufnahme des pneumatisch übertragenen Anhänger-Bremsdrucks nutzbar gemacht werden.

In dem SAE-Paper 973284 "Vehicle Dyanmics Control for Commercial Vehicles" ist eine Fahrdynamikregelung beschrieben, mit der die Querdynamik von Nutzfahrzeugen und somit auch von Fahrzeuggespannen, die aus einem Zugfahrzeug und einem Auflieger bestehen, geregelt wird. Hierzu werden Sollwerte für die Gierrate, den Schwimmwinkel, den Knickwinkel zwischen Zugfahrzeug und Auflieger sowie, mit Blick auf eine Umkippgefahr, für die Querbeschleunigung ermittelt. Als Sensoren werden bei dieser Fahrdynamikregelung Raddrehzahlsensoren, Drucksensoren, ein Lenkwinkelsensor, ein Gierratensensor und ein Querbeschleunigungssensor eingesetzt. Zur Stabilisierung des Fahrzeuggespannes werden in Abhängigkeit der Regelabweichungen Motoreingriffe und Bremseneingriffe durchgeführt. Unter anderem wird vorgeschlagen, die Bremsen des Aufliegers seitenweise zu betätigen. Die Ansteuerung der Radbremsen des Aufliegers hängt von der Art der Bremsanlage ab, mit der der Auflieger ausgestattet ist..Zum einen kann der Auflieger mit einem elektrischen Bremssystem (EBS) und zum anderen mit einer konventionellen Bremsanlage ausgestattet sein. Ist der Auflieger mit einem elektrischen Bremssystem ausgestattet, so werden die den einzelnen Rädern zugeordneten Ventile nicht mehr über Druckluft, sondern mittels elektrischer Signale angesteuert. Die zur Ansteuerung der einzelnen Radbremsen erforderlichen Drucksollwerte werden dem Auflieger über einen CAN Datenbus zugeführt. Die Übertragung von Drucksollwerten, die den Radbremsen des Aufliegers rad- oder achsweise zugeordnet sind, ist in diesem Zusammenhang nicht offenbart. Ist der Auflieger dagegen mit einer konventionellen Bremsanlage ausgestattet, so ist ein Anhängersteuerventil (TCM) vorgesehen, mit dem das im Steuergerät ermittelte elektronische Signal für einen Solldruck am Kupplungskopf in einen Steuerdruck konvertiert wird. In diesem Zusammenhang ist allerdings kein konkreter Aufbau des Anhängersteuerventils offenbart.

Die US 3,895,683 beschreibt eine Vorrichtung zur Stabilisierung eines aus einem Zugfahrzeug und einem Anhänger bestehenden Fahrzeuggespannes. Hierzu ist das Fahrzeuggespann mit einer Sensorik zur Ermittlung der Querbeschleunigung ausgestattet, wobei diese Sensorik aus zwei Pendeln besteht. Werden die Pendel entsprechende weit ausgelenkt, so werden unter anderem Bremseneingriffe zur Stabilisierung des Fahrzeuggespannes durchgeführt. Es sind zwei Arten von Bremsanlagen offenbart, mit denen das Fahrzeuggespann ausgestattet sein kann. Zum einen handelt es sich um eine elektrische Bremsanlage. In diesem Fall sind die im Anhänger angebrachten, zu den elektrischen Bremsen führenden elektrischen Leitungen über einen Stecker mit der Bremsanlage des Zugfahrzeuges verbunden. Die Bremsklötze werden mittels Magnete bewegt. Zum anderen ist eine hydraulische Bremsanlage beschrieben. In diesem Fall ist die Bremsanlage des Anhängers über ein nicht näher beschriebenes Magnetventil oder einen nicht näher beschriebenen Kolben an die Bremsanlage des Zugfahrzeuges angebunden.

Der US 5,496,098 ist ein Bremssystem zu entnehmen, welches eine Feststellbremse und einen Retarder umfasst. In Abhängigkeit der Betätigung des Bremspedals wird ein elektrisches Bremsanforderungssignal erzeugt. Der Retarder in Abhängigkeit der Auslenkung des Bremspedals angesteuert, dies erfolgt in variabel oder in kleinen Schritten, wobei bei einer vorgegebenen Auslenkung des Bremspedals der Retarder die maximal mögliche Verzögerung bezogen erzeugen soll. Die Wert für die vorgegebene Auslenkung wird in Abhängigkeit der Masse des Fahrzeuges bestimmt. Wird das Bremspedal über die vorgegebene Auslenkung hinaus betätigt, so unterstützt unter Verwendung der Feststellbremse eine zusätzliche Bremswirkung erzeugt.

Aufgabe der Erfindung ist es, eine Bremsvorrichtung eines Fahrzeugs mit einer elektropneumatischen Bremsvorrichtung sowohl im Zugfahrzeug als auch im Anhängerfahrzeug dahingehend weiterzubilden, daß mit technisch möglichst einfach zu realisierenden Mitteln eine Erkennung von stabilitätskritischen und insoweit gefährlichen Fahrzuständen sowie eine Beseitigung solcher Fahrzustände möglich ist.

Diese Aufgabe wird von einer Bremsvorrichtung der oben beschriebenen Art dadurch gelöst, daß die Schnittstelle ein elektrisch ansteuerbares Anhängersteuerventil ist, welches einen Steuerdruck an einem Kupplungskopf des Anhängerfahrzeugs oder des Aufliegers bereitstellt. Das Anhängersteuerventil umfasst dabei ein Proportionalventil und ein Relaisventil, wobei das Proportionalventil abhängig von den von der Recheneinheit ausgegebenen Steuersignalen das Relaisventil ansteuert, und wobei das Relaisventil bei einem Bremsvorgang durch das Proportionalventil mit einem Vorratsbehälter verbunden wird und über die pneumatische Schnittstelle des Kupplungskopfes die Bremsen des Anhängerfahrzeuges aktiviert.

Durch dieses elektrisch ansteuerbare Anhängersteuerventil wird in einer stabilitätskritischen Fahrsituation durch eine elektrische Signalübertragung ein Sollwert für den Anhängerbremsdruck übertragen. Pneumatische Steuerleitungenkönnen dabei vollständig entfallen.

Die Erfindung wird darüber hinaus auch dadurch gelöst, daß die Schnittstelle eine genormte elektrische Motorwagen-Anhänger-Schnittstelle ist, über die wenigstens ein Drucksollwert zum Anhängerfahrzeug bzw. zum Auflieger übertragbar ist. Dabei werden über die elektrische Motorwagen-AnhängerSchnittstelle vom Zugfahrzeug aus mehrere Drucksollwerte zum Anhängerfahrzeug übertragen, die den Radbremsen des Anhängerfahrzeugs bzw. Aufliegers radweise oder achsweise zugeordnet sind. Hierdurch kann der Bremsvorgang des Anhängerfahrzeugs praktisch auf jede beliebige Fahrsituation angepaßt werden.

Auch bei dieser Lösung ist es besonders vorteilhaft, daß die Übertragung der Steuersignale ausschließlich auf elektrischem Wege und daher weitestgehend störunempfindlich erfolgt.

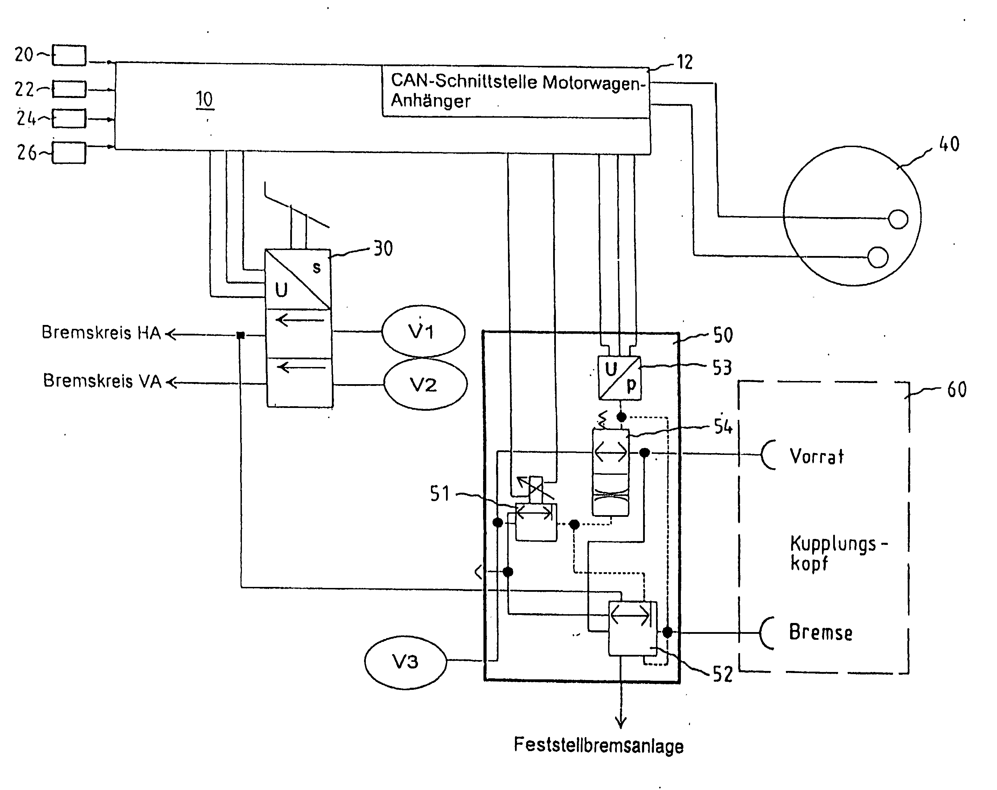

Weitere Merkmale und Vorteile der Erfindung sind Gegenstand der nachfolgenden Beschreibung sowie der zeichnerischen Darstellung eines Ausführungsbeispiels. In der Figur ist schematisch eine Bremsvorrichtung nach der Erfindung dargestellt.

Eine Bremsvorrichtung für Gespanne, insbesondere druckluftgetriebene Nutzfahrzeug-Gespanne mit einem Zugfahrzeug und mit einem Anhängerfahrzeug oder Auflieger umfaßt ein Steuergerät 10, dem die Ausgangssignale eines Lenkradwinkelsensors 20 und/oder eines Gierratensensors 22 und/oder eines Querbeschleunigungssensors 24 und/oder eines Knick winkelsensors 26 zugeführt werden. Dem Steuergerät 10 können ferner elektrische Signale eines mit dem Bremspedal verbundenen Wegsensors 30 zugeführt werden, der die Bremspedalstellung erfaßt und abhängig von dieser einen Bremskreis einer Vorderachse VA sowie einen Bremskreis an der Hinterachse HA mit einem Druck eines Druckreservoirs V2 bzw. V1 beaufschlagt.

Bei einem Verfahren zur Stabilisierung von druckluftgebremsten Nutzfahrzeug-Gespannen ist nun vorgesehen, daß man abhängig von dem von dem Lenkradwinkelsensor 20 erfaßten Lenkradwinkel sowie abhängig von der von dem Gierratensensor 22 erfaßten Gierrate und/oder abhängig von der von dem Querbeschleunigungssensor 24 erfaßten Querbeschleunigung und/oder abhängig von dem von dem Knickwinkelsensor 24 erfaßten Knickwinkel die Bremse des Anhängerfahrzeugs dann, wenn diese Werte auf einen stabilitätskritischen Fahrzustand schließen lassen, das heißt vorgegebene an sich bekannte Schwellenwerte über- und/oder unterschreiten, gesteuert betätigt.

Hierzu werden bei der in der Figur dargestellten Bremsvorrichtung Drucksollwerte zur Betätigung der Bremse des Anhängerfahrzeugs an eine Schnittstelle 12 zwischen dem Zug- und dem Anhängerfahrzeug ausgegeben. Diese Schnittstelle 12 ist beispielsweise eine genormte Motorwagen-Anhängerschnittstelle, welche über elektrische Leitungen mit einer ABS-Steckdose 40 verbunden ist. In diesem Falle erfolgt die Übertragung der Steuersignale auf elektrischem Wege.

Auf diese Weise ist es auch möglich, einzelne Radbremsen der Bremsanlage des Anhängerfahrzeugs anzusteuern. Die Drucksollwerte, die von der Recheneinheit 10 über die Motorwagen-Anhängerschnittstelle 12 an die ABS-Steckdose 40 übertragen werden, können beispielsweise dabei so gewählt werden, daß sie den Radbremsen des Anhängerfahrzeugs rad-, achs- oder seitenweise zugeordnet sind.

Bei einer anderen, ebenfalls in der Figur dargestellten Ausführungsform ist vorgesehen, daß die Recheneinheit 10 über elektrische Leitungen mit einem elektrisch ansteuerbaren Anhängersteuerventil 50 verbunden ist, welches einen Steuerdruck an einem Kupplungskopf 60 des Anhängerfahrzeugs bereitstellt.

Wie aus der Figur hervorgeht, umfaßt das Anhängersteuerventil 50 ein Proportionalventil 51, welches abhängig von Steuersignalen, die von der Recheneinheit 10 an es ausgegeben werden, ein Relaisventil 52 ansteuert. Bei einem Bremsvorgang wird das Relaisventil 52 durch das Proportionalventil 51 mit einem Volumen V3 verbunden und aktiviert über die pneumatische Schnittstelle des Kupplungskopfes 60 die Bremsen des Anhängerfahrzeugs. Die Stellung des Relaisventils 52 wird durch einen Drucksensor 53 erfaßt und an die Recheneinheit 10 ausgegeben, welche ihrerseits wieder Steuersignale an das Proportionalitätsventil 51 abhängig von dieser Stellung ausgibt. Auf diese Weise ist die Bremse des Anhängerfahrzeugs geregelt ansteuerbar.

In dem Anhängersteuerventil 50 ist ferner ein weiteres an sich bekanntes Ventil 54 vorgesehen, welches lediglich den Zweck hat, zu verhindern, daß beispielsweise bei einem Abriß der Druckschläuche zu dem Anhängerfahrzeug der Vorratsbehälter V3 in dem Zugfahrzeug entleert wird. In diesem Falle wird das Ventil 54 von der gezeigten durchgängigen Stellung in eine Drosselstellung geschaltet.

Durch das elektrisch ansteuerbare Anhängersteuerventil 50 und den Kupplungskopf 60 ist es möglich, aufgrund des obenbeschriebenen Verfahrens stabilitätskritische Fahrzustände bei Gespannen auch mit zumeist älteren Anhängern zu verhindern, die noch über keine elektrische Motorwagen-Anhängerschnittstelle, wie sie oben beschreiben wurde, verfügen.

## Patentansprüche

1. Bremsvorrichtung für Gespanne, insbesondere druckluftgebremste Nutzfahrzeug-Gespanne mit einem Zugfahrzeug und mit einem Anhängerfahrzeug oder einem Auflieger, wobei wenigstens das Zugfahrzeug als Sensormittel zur Erfassung fahrdynamischer Größen wenigstens einen Lenkradwinkelsensor (20) und/oder wenigstens einen Gierratensensor (22) und/oder wenigstens einen Querbeschleunigungssensor (24) und/oder wenigstens einen Knickwinkelsensor (26) sowie eine Rechen- und Steuereinheit (10) zur Auswertung der von den Sensoren erfaßten Größen und zur Erkennung stabilitätskritischer Fahrzustände aufweist, wobei bei Vorliegen eines stabilitätskritischen Fahrzustandes von der Rechenund Steuereinheit (10) Steuersignale zur Betätigung der Bremse des Anhängerfahrzeugs bzw. des Aufliegers an eine Schnittstelle (12; 50) zwischen dem Zugfahrzeug und dem Anhängerfahrzeug bzw. dem Auflieger ausgegeben werden, wobei die Schnittstelle eine an sich bekannte elektrische Motorwagen-Anhänger-Schnittstelle (12) ist, über die wenigstens ein Drucksollwert zum Anhängerfahrzeug bzw. zum Auflieger übertragbar ist,
**dadurch gekennzeichnet,**
**dass** über die Motorwagen-Anhänger-Schnittstelle (12) von dem Zugfahrzeug mehrere Drucksollwerte zum Anhängerfahrzeug bzw. zum Auflieger übertragen werden, die den Radbremsen des Anhängerfahrzeugs bzw. des Aufliegers rad- oder achsweise zugeordnet sind.

2. Bremsvorrichtung für Gespanne, insbesondere druck-luftgebremste Nutzfahrzeug-Gespanne mit einem Zugfahrzeug und mit einem Anhängerfahrzeug oder einem Auflieger, wobei wenigstens das Zugfahrzeug als Sensormittel zur Erfassung fahrdynamischer Größen wenigstens einen Lenkradwinkelsensor (20) und/oder wenigstens einen Gierratensensor (22) und/oder wenigstens einen Querbeschleunigungssensor (24) und/oder wenigstens einen Knickwinkelsensor (26) sowie eine Rechen- und Steuereinheit (10) zur Auswertung der von den Sensoren erfaßten Größen und zur Erkennung stabilitätskritischer Fahrzustände aufweist, wobei bei Vorliegen eines stabilitätskritischen Fahrzustandes von der Rechenund Steuereinheit (10) Steuersignale zur Betätigung der Bremse des Anhängerfahrzeugs bzw. des Aufliegers an eine Schnittstelle (12; 50) zwischen dem Zugfahrzeug und dem Anhängerfahrzeug bzw. dem. Auflieger ausgegeben werden, wobei die Schnittstelle ein elektrisch ansteuerbares Anhängersteuerventil (50) ist, welches einen Steuerdruck an einem Kupplungskopf (60) des Anhängerfahrzeugs bzw. des Aufliegers bereitstellt,
**dadurch gekennzeichnet,**
**daß** das Anhängersteuerventil (50) ein Proportionalventil (51) und ein Relaisventil (52) umfasst, wobei das Proportionalventil (51) abhängig von den von der Recheneinheit (10) ausgegebenen Steuersignalen das Relaisventil (52) ansteuert, und wobei das Relaisventil (52) bei einem Bremsvorgang durch das Proportionalventil (51) mit einem Vorratsbehälter (V3) verbunden wird und über die pneumatische Schnittstelle des Kupplungskopfes (60) die Bremsen des Anhängerfahrzeuges aktiviert.

3. Bremsvorrichtung nach Anspruch 2, **dadurch gekennzeichnet, dass** das Anhängersteuerventil (50) ferner einen Drucksensor (53) umfaßt, durch den die Stellung des Relaisventils (52) erfaßt wird, wobei die Stellung des Relaisventils (52) an die Recheneinheit (10) ausgegeben wird, welche die Steuersignale an das Proportionalventil (51) abhängig von dieser Stellung ausgibt.

4. Bremsvorrichtung nach Anspruch 2, **dadurch gekennzeichnet, dass** das Anhängersteuerventil (50) ein weiteres Ventil (54) enthält, mit dem verhindert wird, dass bei einem Abriß der Druckschläuche zu dem Anhängerfahrzeug ein Vorratsbehälter (V3) in dem Zugfahrzeug entleert wird.

## Claims

1. A braking device for tractor and trailer combinations, in particular commercial tractor and trailer combinations with compressed air brakes having a tractor vehicle and a trailer vehicle or semi-trailer, at least the tractor vehicle having at least a steering wheel angle sensor (20) and/or at least a yaw rate sensor (22) and/or at least a transverse acceleration sensor (24) and/or at least an articulation angle sensor (26) as sensor means for determining dynamic vehicle movement values and having a processing and control unit (10) for evaluating the values determined by the sensors and for identifying stability-critical driving statuses, in the event of the presence of a stability-critical driving status control signals for actuating the brakes on the trailer vehicle or semi-trailer being sent by the processing and control unit (10) to an interface (12; 50) between the tractor vehicle and the trailer vehicle or semi-trailer, the interface being a known electrical tractor/trailer interface (12) via which at least one reference pressure value can be sent to the trailer vehicle or semi-trailer,
**characterised in that**
several reference pressure values associated with the wheel brakes of the trailer vehicle or the semi-trailer on an axle or wheel basis are sent from the tractor vehicle to the trailer vehicle or semi-trailer via the tractor/trailer interface (12).

2. A braking device for tractor and trailer combinations, in particular commercial tractor and trailer combinations with compressed air brakes having a tractor vehicle and a trailer vehicle or semi-trailer, at least the tractor vehicle having at least a steering wheel angle sensor (20) and/or at least a yaw rate sensor (22) and/or at least a transverse acceleration sensor (24) and/or at least an articulation angle sensor (26) as sensor means for determining dynamic vehicle movement values and having a processing and control unit (10) for evaluating the values determined by the sensors and for identifying stability-critical driving statuses, in the event of the presence of a stability-critical driving status control signals for actuating the brakes on the trailer vehicle or semi-trailer being sent by the processing and control unit (10) to an interface (12; 50) between the tractor vehicle and the trailer vehicle or semi-trailer, the interface being an electrically actuated trailer control valve (50) which provides a control pressure at an air brake hose coupling (60) on the trailer vehicle or semi-trailer,
**characterised in that**
the trailer control valve (50) comprises a proportional valve (51) and a relay valve (52), the proportional valve (51) actuating the relay valve (52) dependent on the control signals output by the processing unit (10) and the relay valve (52) being connected in the event of braking via the proportional valve to a storage container (V3) and activating the brakes on the trailer vehicle via the pneumatic interface of the air brake hose coupling (60).

3. A braking device in accordance with claim 2,
**characterised in that**
the trailer control valve (50) also comprises a pressure sensor (53) by means of which the position of the relay valve (52) is determined, the position of said relay valve (52) being sent to the processing unit (10) which then sends the control signals to the proportional valve (51) dependent on this position.

4. A braking device in accordance with claim 2,
**characterised in that**
the trailer control valve (50) contains a further valve (54) which is used to prevent a storage container (V3) in the tractor vehicle from discharging in the event that the pressure hoses to the trailer vehicle are disconnected.

## Revendications

1. Un dispositif de freinage pour des convois, en particulier des convois de véhicules utilitaires, freinés par air comprimé, avec un véhicule tracteur et avec un véhicule à remorque ou une semi-remorque, où au moins le véhicule tracteur présente, en tant que moyen capteur pour mesurer des grandeurs concernant la dynamique de roulage, au moins un capteur d'angle de rotation de volant (20) et/ou au moins un capteur de taux de lacet (22) et/ou au moins un capteur d'accélération transversale (24) et/ou au moins un capteur d'angle d'articulation (26), ainsi qu'au moins une unité de calcul et de commande (10), pour évaluer les grandeurs mesurées par les capteurs et pour identifier les états de roulage critiques pour la stabilité, où, en cas de présence d'un état de roulage critique pour la stabilité, des signaux de commande sont émis par l'unité de calcul et de commande (10), dans le but d'actionner le frein du véhicule à remorque, ou-de la semi-remorque, à une interface (12; 50) entre le véhicule tracteur et le véhicule à remorque, respectivement la semi-remorque, où l'interface est une interface de remorque de véhicule à moteur (12) électrique, connue en soi, par l'intermédiaire de laquelle au moins une valeur de consigne de pression est susceptible d'être transmise au véhicule à remorque, respectivement à la semi-remorque,
**caractérisé en ce qu'**
une pluralité de valeurs de consigne de pression sont transmises depuis le véhicule tracteur au véhicule à remorque ou à la semi-remorque, par l'intermédiaire de l'interface véhicule motorisé-remorque (12), lesdites valeurs de consigne de pression étant associées, roue par roue ou essieu par essieu, aux freins des roues du véhicule à remorque ou de la semi-remorque.

2. Dispositif de freinage pour des convois, en particulier des convois de véhicules utilitaires, freinés par air comprimé, avec un véhicule tracteur et avec un véhicule à remorque ou une semi-remorque, où au moins le véhicule tracteur présente, en tant que moyen capteur pour mesurer des grandeurs concernant la dynamique de roulage, au moins un capteur d'angle de rotation de volant (20) et/ou au moins un capteur de taux de lacet (22) et/ou au moins un capteur d'accélération transversale (24) et/ou au moins un capteur d'angle d'articulation (26), ainsi qu'au moins une unité de calcul et de commande (10), pour évaluer les grandeurs mesurées par les capteurs et pour identifier les états de roulage critiques pour la stabilité, où, en cas de présence d'un état de roulage critique pour la stabilité, des signaux de commande sont émis par l'unité de calcul et de commande (10), dans le but d'actionner le frein du véhicule à remorque, ou de la semi-remorque, à une interface (12; 50) entre le véhicule tracteur et le véhicule à remorque, respectivement la semi-remorque, où l'interface est une soupape de commande pour remorque (50) pouvant être commandée électriquement, qui fournit une pression de commande à une tête d'attelage (60) du véhicule à remorque ou de la semi-remorque,
**caractérisé en ce que**
la soupape de commande pour remorque (50) comprend une soupape proportionnelle (51) et une soupape à relais (52), la soupape proportionnelle (51) commandant la soupape à relais (52), en fonction des signaux de commande fournis par l'unité de calcul (10), et la soupape à relais (52), en cas de processus de freinage, étant reliée, au moyen de la soupape proportionnelle (51), à un récipient de stockage (V3) et, par l'intermédiaire de l'interface pneumatique de la tête d'attelage (60), active les freins du véhicule à remorque.

3. Dispositif de freinage selon la revendication 2, **caractérisé en ce que** la soupape de commande pour remorque (50) comprend en outre un capteur de pression (53), au moyen duquel la position de la soupape à relais (52) est appréhendée, le réglage de la soupape à relais (52) étant fourni à l'unité de calcul (10) qui fournit les signaux de commande à la soupape proportionnelle (51), en fonction de cette position.

4. Dispositif de freinage selon la revendication 2, **caractérisé en ce que** la soupape de commande pour remorque (50) contient une autre soupape (54), à l'aide de laquelle, en cas d'arrachement des tuyaux à pression sur le véhicule à remorque, on empêche qu'un réservoir de stockage (V3), monté dans le véhicule tracteur, soit vidé.
